# EUROPÄISCHE PATENTSCHRIFT

(11) **EP 3 512 974 B1**
(45) Veröffentlichungstag und Bekanntmachung des Hinweises auf die Patenterteilung: **22.09.2021**
(21) Anmeldenummer: 17798144.6
(22) Anmeldetag: 30.10.2017
(51) Int. Cl.: C22C 19/05

(54) **SUPERLEGIERUNG OHNE TITAN, PULVER, VERFAHREN UND BAUTEIL**
SUPERALLOY WITHOUT TITANIUM, POWDER, METHOD AND COMPONENT
SUPERALLIAGE SANS TITANE, POUDRE, PROCÉDÉ ET COMPOSANT

(30) Priorität: 02.11.2016 DE 102016221470
(43) Veröffentlichungstag der Anmeldung: 24.07.2019
(73) Patentinhaber: Siemens Energy Global GmbH & Co. KG, 81739 München (DE)
(72) Erfinder: HASSELQVIST, Magnus, 61213 Finspång (SE); HEINZE, Christoph, 10317 Berlin (DE); OTT, Michael, 45470 Mülheim an der Ruhr (DE); STÖHR, Britta, 14059 Berlin (DE)
(86) Internationale Anmeldenummer: PCT/EP2017/077789
(87) Internationale Veröffentlichungsnummer: WO 2018/083065

(56) Entgegenhaltungen:
- EP-A1- 1 054 072
- EP-A1- 1 431 405
- EP-A1- 2 859 979
- EP-A2- 1 201 778
- US-A- 5 035 958
- US-A1- 2016 167 172

## Beschreibung

Die Erfindung betrifft eine Superlegierung ohne Titan, ein Pulver sowie ein Fertigungsverfahren, das die Legierung und das Pulver benutzt sowie ein Bauteil.

Alloy 247 ist eine Nickelbasis-Gusslegierung, die breite Anwendung im Bereich der Hochtemperaturturbinenkomponenten findet. Diese Legierung verfügt über einen hohen γ'-Anteil und dadurch gute Kriecheigenschaften in Kombination mit einer guten Oxidationsbeständigkeit. Allerdings tendiert die Legierung im gegossenen Zustand zu Seigerungen, die dazu führen, dass sich in den dendritischen und den interdendritischen Bereichen eine deutlich unterschiedliche γ/γ`-Struktur einstellt. Wünschenswert ist eine Morphologie wie sie in den dendritischen Bereichen vorliegt.

Die Seigerungen während der Erstarrung führen dazu, dass sich in den interdendritischen Bereichen hohe Konzentrationen an γ'-bildenden Elementen wie Titan (Ti) und Tantal (Ta) anreichern, die die γ'-Solvustemperatur lokal stark erhöhen. Dies kann auch durch ein anschließendes Lösungsglühen nicht behoben werden, da die γ'-Solvustemperatur in den interdendritischen Bereichen so hoch sein kann, dass kein Lösungsglühen ohne Anschmelzungen (Incipient melting) mehr möglich ist.

Die Bruttozusammsetzung der Legierung Alloy 247 ist so angelegt, dass sich in den dendritischen Bereichen eine optimale Struktur ergibt. Die vergröberten γ'-Ausscheidungen in den interdendritischen Bereichen nimmt man dabei als unvermeidbar in Kauf. MAR M 002 enthält kein Ti und lediglich 0.05 Zr (siehe Abbildung von EP 2 859 979)

Es ist daher Aufgabe der Erfindung oben genanntes Problem zu lösen.

Im Rahmen von ersten Versuchen, den Alloy 247 mittels additiver Verfahren zu verarbeiten, ist aufgefallen, dass sich auch nach vollständiger Wärmebehandlung (identisch zum Gussmaterial) kein optimales γ/γ'-Gefüge einstellt. Der Grund dafür liegt darin, dass nach dem additiven Auftrag eine weitgehend homogene Elementverteilung vorliegt. Die Seigerungseffekte, wie sie bei Gussmaterial auftreten, kommen bei dem additiv aufgebauten Material nicht vor. Allerdings zeigt sich, dass das Gefüge, das sich in dem additiv aufgebauten Material einstellt, nicht optimal ist. Der Vergleich mit dem Gussmaterial zeigt, dass die γ/γ`-Struktur ähnlich der in den Übergangsbereichen (dendritisch/interdendritisch) im Gussmaterial ist. Dies lässt darauf schließen, dass in der Bruttozusammensetzung der momentan genutzten Alloy247-Legierungen zu hohe Anteile an γ'-Bildnern vorliegen.

Bisher wurde für additive Fertigungsverfahren die gleiche chemische Zusammensetzung verwendet, wie sie auch im Gussmaterial vorliegt. Aufgrund des hohen γ'-Anteils ist diese Legierung jedoch nur sehr schlecht schweißbar und damit mittels additiver Verfahren schlecht verarbeitbar.

Die Aufgabe wird gelöst durch eine Legierung gemäß Anspruch 1, ein Pulver gemäß Anspruch 4, ein Verfahren gemäß Anspruch 5 und ein Bauteil gemäß Anspruch 6.

In den Unteransprüchen sind weitere vorteilhafte Maßnahmen aufgelistet, die beliebig miteinander kombiniert werden können, um weitere Vorteile zu erzielen.

Es wird vorgeschlagen, eine modifizierte Zusammensetzung des Alloy 247 zu verwenden. Dieser Werkstoff weist vorzugsweise kein Titan (Ti) bis auf Verunreinigungen auf sowie einen reduzierten Anteil an Tantal (Ta) (γ'-Bildner).

Weiterhin wurde der Anteil an Chrom (Cr) erhöht, so dass die Oxidations- und Korrosionsbeständigkeit noch weiter verbessert wird.

Optional können dem Werkstoff bis 0,03 Gew.-% Yttrium (Y) zur Verbesserung der zyklischen Oxidationsbeständigkeit zulegiert werden.

Vorteilhaft ist folgender Zusammensetzungsbereich (in Gew.-%): Ni: Rest, Cr: 9-16%, Co: 9-11,5%, W: 6,5-10,5%, Ta: 1-3%, Al: 4-6%, C: 0,03-0,1%, B: 0,005 - 0,015%, Hf: 0,3-1,5%, Zr: 0,005-0,015%, Y: 0-0,03% und, ggf. unvermeidbare, Verunreinigungen.

Vorteile für die nickelbasierte Superlegierung ergeben sich auch für folgende Bereiche (in Gew.-%):
Chrom (Cr): 12% - 14%,
Kobalt (Co): 9,5% - 11,0%,
Wolfram (W): 7,5% - 9,5%,
Tantal (Ta): 1,5% - 2,5%,
Aluminium (Al): 4,5% - 5,5%,
Kohlenstoff (C): 0,04% - 0,08%,
Bor (B): 0,007% - 0,01%,
Hafnium (Hf): 0,4% - 1,2%,
Zirkon (Zr): 0,007% - 0,01%,
optional Yttrium (Y): 0,01% - 0,03%.

Besondere Vorteile ergeben sich für die nickelbasierte Superlegierung mit diesen Werten (in Gew.-%):
Chrom (Cr) : 12,5%,
Kobalt (Co): 10,5%,
Wolfram (W): 8,5%,
Tantal (Ta): 2%,
Aluminium (Al): 5%,
Kohlenstoff (C): 0,05%,
Bor (B) : 0,009%,
Hafnium (Hf): 0,5%,
Zirkon (Zr): 0,009%,
optional Yttrium (Y):0% - 0,03%.

Vorteilhaft ist eine abschließende Legierungsauflistung von Ni, Cr, Co, W, Ta, Al, C, B, Hf, Zr und optional Y.

Der hier vorgeschlagene Werkstoff ist vollständig neu. Er kombiniert folgende Vorteile:
- bessere Schweißbarkeit und ist damit besser geeignet für additive Verfahren sowie zum Auftragsschweißen im Zuge von Reparaturen,
- optimierte γ'-Struktur durch Vergrößerung des Wärmebehandlungsfensters, dadurch optimierte Kriechbeständigkeit (γ/γ'-Struktur nach additivem Aufbau und vollständiger Wärmebehandlung sollte sich wie in den dendritischen Bereichen im Gussgefüge einstellen),
- verbesserte Wirtschaftlichkeit bei additiven Verfahren,
- wirtschaftliche Verarbeitbarkeit des Alloy 247 mittels additiver Verfahren,
- verbesserte Oxidationsbeständigkeit.

## Patentansprüche

1. Nickelbasierte Superlegierung, bestehend aus (in Gew.-%):
Chrom (Cr): 9% - 16%,
Kobalt (Co): 9% - 11,5%,
Wolfram (W): 6,5% - 10,5%,
Tantal (Ta): 1% - 3%,
Aluminium (Al): 4% - 6%,
Kohlenstoff (C): 0,03% - 0,1%,
Bor (B): 0,005% - 0,015%,
Hafnium (Hf): 0,3% - 1,5%,
Zirkon (Zr): 0,005% - 0,015%,
optional Yttrium (Y):0% - 0,03%,
aufweisend kein Titan (Ti),
und Rest Nickel mit, ggf. unvermeidbaren, Verunreinigungen.

2. Nickelbasierte Superlegierung gemäß Anspruch 1, bestehend aus (in Gew.-%):
Chrom (Cr): 12% - 14%,
Kobalt (Co): 9,5% - 11,0%,
Wolfram (W): 7,5% - 9,5%,
Tantal (Ta): 1,5% - 2,5%,
Aluminium (Al): 4,5% - 5,5%,
Kohlenstoff (C): 0,04% - 0,08%,
Bor (B): 0,007% - 0,01%,
Hafnium (Hf): 0,4% - 1,2%,
Zirkon (Zr): 0,007% - 0,01%,
optional Yttrium (Y): 0,01% - 0,03%.

3. Nickelbasierte Superlegierung gemäß Anspruch 1 oder 2, bestehend aus (in Gew.-%):
Chrom (Cr): 12,5%,
Kobalt (Co): 10,5%,
Wolfram (W): 8,5%,
Tantal (Ta): 2%,
Aluminium (Al): 5%,
Kohlenstoff (C): 0,05%,
Bor (B) : 0,009%,
Hafnium (Hf): 0,5%,
Zirkon (Zr): 0,009%,
optional Yttrium (Y): 0,01% - 0,03%.

4. Pulver, zumindest aufweisend eine Legierung gemäß einem der vorhergehenden Ansprüche, insbesondere bestehend aus einer solchen Legierung.

5. Verfahren zur Herstellung eines Bauteils,
bei dem oben genannte Legierung gemäß einem der Ansprüche 1 bis 3 oder ein Pulver gemäß Anspruch 4 verwendet wird, insbesondere ein Verfahren zur additiven Fertigung,
ganz insbesondere Selektives Lasersintern oder Selektives Laseraufschmelzen.

6. Bauteil, aufweisend eine Legierung nach einem der Ansprüche 1 bis 3, oder hergestellt aus einem Pulver gemäß Anspruch 4, oder hergestellt durch ein Verfahren gemäß Anspruch 5.

## Claims

1. Nickel-based superalloy consisting of (in % by weight):
chromium (Cr): 9%-16%,
cobalt (Co): 9%-11.5%,
tungsten (W): 6.5%-10.5%,
tantalum (Ta): 1%-3%,
aluminium (Al): 4%-6%,
carbon (C): 0.03%-0.1%,
boron (B): 0.005%-0.015%,
hafnium (Hf): 0.3%-1.5%,
zirconium (Zr): 0.005%-0.015%,
optionally yttrium (Y): 0%-0.03%,
not containing any titanium (Ti),
and nickel with, possibly unavoidable, impurities as balance.

2. Nickel-based superalloy according to Claim 1, comprising (in % by weight):
chromium (Cr): 12%-14%,
cobalt (Co): 9.5%-11.0%,
tungsten (W): 7.5%-9.5%,
tantalum (Ta): 1.5%-2.5%,
aluminium (Al): 4.5%-5.5%,
carbon (C): 0.04%-0.08%,
boron (B): 0.007%-0.01%,
hafnium (Hf): 0.4%-1.2%,
zirconium (Zr): 0.007%-0.01%,
optionally yttrium (Y): 0.01%-0.03%.

3. Nickel-based superalloy according to Claim 1 or 2, comprising (in % by weight):
chromium (Cr): 12.5%,
cobalt (Co): 10.5%,
tungsten (W): 8.5%,
tantalum (Ta): 2%,
aluminium (Al): 5%,
carbon (C): 0.05%,
boron (B): 0.009%,
hafnium (Hf): 0.5%,
zirconium (Zr): 0.009%,
optionally yttrium (Y): 0.01%-0.03%.

4. Powder comprising at least an alloy according to any of the preceding claims, in particular consisting of such an alloy.

5. Process for producing a component, wherein the abovementioned alloy according to any of Claims 1 to 3 or a powder according to Claim 4 is used, in particular a process for additive manufacture, especially selective laser sintering or selective laser melting.

6. Component comprising an alloy according to any of Claims 1 to 3 or produced from a powder according to Claim 4 or produced by a process according to Claim 5.

## Revendications

1. Superalliage à base de nickel consistant (en % en poids) :
Chrome (Cr) : 9% à 16 %,
Cobalt (Co) : 9% à 11,5%,
Tungstène (W) : 6,5% à 10,5%,
Tantale (Ta) : 1% à 3%,
Aluminium (Al) : 4% à 6%,
Carbone (C) : 0,03% à 0,1%,
Bore (B) : 0,005% à 0,015%,
Hafnium (Hf) : 0,3% à 1,5%,
Zirconium (Zr) : 0,005% à 0,015%,
facultativement yttrium (Y) : 0% à 0,03%,
n'ayant pas de titane (Ti),
et le reste étant du nickel avec éventuellement des impuretés inévitables.

2. Superalliage à base de nickel suivant la revendication 1, consistant en (en % en poids) :
Chrome (Cr) : 12% à 14 %,
Cobalt (Co) : 9,5% à 11%,
Tungstène (W) : 7,5% à 9,5%,
Tantale (Ta) : 1,5% à 2,5%,
Aluminium (Al) : 4,5% à 5,5%,
Carbone (C) : 0,04% à 0,08%,
Bore (B) : 0,007% à 0,01%,
Hafnium (Hf) : 0,4% à 1,2%,
Zirconium (Zr) : 0,007% à 0,01%,
facultativement yttrium (Y) : 0,01% à 0,03%.

3. Superalliage à base de nickel suivant la revendication 1 ou 2, consistant en (en % en poids) :
Chrome (Cr) : 12,5%,
Cobalt (Co) : 10,5%,
Tungstène (W) : 8,5%,
Tantale (Ta) : 2%,
Aluminium (Al) : 5%,
Carbone (C) : 0,05%,
Bore (B) : 0,009%,
Hafnium (Hf) : 0,5%,
Zirconium (Zr) : 0,009%,
facultativement yttrium (Y) : 0,01% à 0,03%.

4. Poudre ayant au moins un alliage suivant l'une des revendications précédentes, notamment constituée d'un alliage de ce genre.

5. Procédé de production d'une pièce, dans lequel on utilise l'alliage mentionné ci-dessus suivant l'une des revendications 1 à 3 ou une poudre suivant la revendication 4, notamment procédé de fabrication additif, tout particulièrement frittage laser sélectif ou fusion laser sélective.

6. Pièce ayant un alliage suivant l'une des revendications 1 à 3 ou fabriquée en une poudre suivant la revendication 4 ou fabriquée par un procédé suivant la revendication 5.
